# EUROPEAN PATENT SPECIFICATION

(11) **EP 2 646 496 B1**
(45) Date of publication and mention of the grant of the patent: **11.02.2015**
(21) Application number: 11805937.7
(22) Date of filing: 02.12.2011
(51) Int. Cl.: C08J 3/00, C08J 3/22, C08J 5/18, A23B 4/20, A23L 3/3463, A23L 3/3472, C08K 5/00

(54) **A PROCESS FOR OBTAINING A FILM COMPRISED OF THE INCORPORATION OF NATURALLY-SOURCED ANTIMICROBIAL AGENTS IN A POLYMERIC STRUCTURE TO DEVELOP PACKAGES FOR INCREASING THE SHELF LIFE OF REFRIGERATED MEAT, PREFERENTIALLY REFRIGERATED FRESH SALMON**
VERFAHREN ZUR HERSTELLUNG EINES FILMS MIT DER INTEGRATION VON ANTIMIKROBIELLEN MITTELN NATÜRLICHEN URSPRUNGS IN EINER POLYMERISCHEN STRUKTUR ZUR ENTWICKLUNG VON VERPACKUNGEN ZUR ERHÖHUNG DER HALTBARKEIT VON GEKÜHLTEM FLEISCH, VORZUGSWEISE GEKÜHLTEM FRISCHEM LACHS
PROCÉDÉ D'OBTENTION D'UN FILM CONSTITUÉ D'AGENTS ANTIMICROBIENS D'ORIGINE NATURELLE INTÉGRÉS DANS UNE STRUCTURE POLYMÈRE ET DESTINÉ À LA MISE AU POINT DE CONDITIONNEMENTS PERMETTANT DE PROLONGER LA DURÉE DE CONSERVATION DE PRODUITS ALIMENTAIRES RÉFRIGÉRÉS DONT, DE PRÉFÉRENCE, LE SAUMON FRAIS RÉFRIGÉRÉ

(30) Priority: 03.12.2010 CL 13422010
(43) Date of publication of application: 09.10.2013
(73) Proprietor: Universidad De Santiago De Chile, CP 9170022, Estación Central Santiago (CL)
(72) Inventor: GUARDA, Abel, CP 9170022 Santiago (CL); RUBILAR, Javiera, CP 9170022 Santiago (CL); GALOTTO, María José, CP 9170022 Santiago (CL)
(74) Representative: Grünecker, Kinkeldey, Stockmair & Schwanhäusser
(86) International application number: PCT/IB2011/002930
(87) International publication number: WO 2012/073107

(56) References cited:
- WO-A1-2006/000032
- Liyanaarachchige Sanjeewani Rupika Herath: "Development and Evaluation of Low Density Polyethylene-Based Antimicrobial Food Packaging Films Containing Natural Agents", , 30 September 2010 (2010-09-30), pages 1-207, XP55023318, Retrieved from the Internet: URL:http://vuir.vu.edu.au/15840/1/Rupika_H erath_2010.pdf [retrieved on 2012-03-29]
- ISABEL M. MARTINS ET AL: "Microencapsulation of thyme oil by coacervation", JOURNAL OF MICROENCAPSULATION, vol. 26, no. 8, 1 December 2009 (2009-12-01), pages 667-675, XP55022800, ISSN: 0265-2048, DOI: 10.3109/02652040802646599
- LIOLIOS C C ET AL: "Liposomal incorporation of carvacrol and thymol isolated from the essential oil of Origanum dictamnus L. and in vitro antimicrobial activity", FOOD CHEMISTRY, ELSEVIER LTD, NL, vol. 112, no. 1, 1 January 2009 (2009-01-01), pages 77-83, XP023181422, ISSN: 0308-8146, DOI: 10.1016/J.FOODCHEM.2008.05.060 [retrieved on 2008-05-29]
- KRISHNAN ET AL: "The use of gum arabic and modified starch in the microencapsulation of a food flavoring agent", CARBOHYDRATE POLYMERS, APPLIED SCIENCE PUBLISHERS, LTD. BARKING, GB, vol. 62, no. 4, 14 December 2005 (2005-12-14), pages 309-315, XP005194837, ISSN: 0144-8617, DOI: 10.1016/J.CARBPOL.2005.03.020

## Description

### TECHNICAL FIELD OF THE INVENTION

The present invention refers to processes for obtaining a film comprising the incorporation of naturally-sourced antimicrobial agents into a polymeric structure in order to develop packages for increasing the shelf life of refrigerated meat, preferentially refrigerated fresh salmon. In the present invention, the active agent is microencapsulated-incorporated on the surface of a plastic film so that a differentiated kinetics is obtained in function of the type of coating used for obtaining the microcapsule.

### BACKGROUND OF THE INVENTION

In the last few decades, great technological development has been taking place in food packaging in order to meet the consumer demands regarding more natural methods of conservation, and ways of packaging and storage control to ensure the quality and safety of foods. Among the most interesting innovations in this field are the active packaging techniques, with which packages are intended to play an interactive role, as well as to constitute a physical barrier between the product and its environment, taking advantage of the interactions between the package and the food product towards its quality, acceptability, and safety. The EC European Parliament regulation No. 1935/2004 defines for the first time the active materials for packaging as those intended to increase the shelf life, or to keep or improve the state of packaged foods, and are designed to deliberately incorporate components that transmit substances to packaged foods or to their environment, or that absorb substances from packaged foods or from their environment.

But, the active packaging technology in which the most attention focus is placed is undoubtedly the antimicrobial active packaging. As it is well known, the growth of microorganisms is the main cause for the spoilage of fresh foods. The growth of spoiling microorganisms reduces food's life, while the growth of pathogen microorganisms puts health at risk. Using antimicrobial packaging promotes the release of substances that would inhibit the microorganisms' growth in the surface of foods. The antimicrobial action in active packaging can be based on the emission of volatile substances to the package's head space, or on the migration of the material's active component to the packaged food's surface.

In the state of the art, there are several procedures for incorporating antimicrobial compounds into the packaging film. For example, in the document WO 2006/000032 (Miltz et al.), published on January 05, 2006, a material for the antimicrobial package is disclosed containing from 0.05% to 1.5% natural essential oil by weight. The oil can be selected from linalool and/or methylchavicol, but also from one or more of citral, geraniol, methylcinamate, methyleugenol, 1,8-cineol, trans-α-bergamotene, carvacrol, and thymol mixed with one or more polymers selected from copolymers of vinyl-ethylene alcohol, polyacrilates, including the methaacrilate copolymers, ethyl acrilate, lonomers, nylon, and other hydrophilic polymers, or polymers having functional groups capable of partially anchor the additives and the coated binder mixture which is located in the film's contact face of food packaging or incorporated into a food packaging film. A binding agent as polyethylene glycol is added to the mixture to enhance the volatile oil retention in the polymer during the process. This material has no regulatory limitations, and at the referred concentrations, does not generate undesirable flavors in the packaged food.

The document WO 2010/006710 (Yildirim et al.) published on January 21, 2010, discloses a packaging film for producing a package that uses a single-layer or multiple-layer substrate, and an antimicrobial and/or antifungal functional layer applied to the substrate, and the formation of an outermost layer of the packaging film of at least two segments. According to the disclosures in this document, the functional layer comprises particles as antimicrobial agents and/or antifungal active substances.

The document WO 2010/057658 (Del Nobile et al.) published on May 27, 2010, discloses a method for producing a film of thermoplastic material, especially low-density polyethylene, incorporating substances with antimicrobial activity. The production process for the film comprises the following steps: a) mixing at a temperature lower than or equal to 160 °C a thermoplastic polymer having a melting point lower than or equal to 160 °C, and at least one substance with antimicrobial activity selected from the group consisting of lysozyme, thymol, and lemon extract; b) subjecting the obtained mixture in this step a) to a compression at the same temperature as indicated above; c) cooling under compression to a temperature lower than or equal to 40 °C, obtaining strips, which are divided into short pieces (pellets); d) feeding these short pieces (pellets) into a extruder provided with a die and with heating means to bring the temperature thereinside to a value lower than or equal to 160 °C; and e) extruding the film through the die.

The three documents described above disclose the processes for incorporating antimicrobial agents into a plastic film. However, the present invention proposes incorporating antimicrobial agents in a much simpler way than those disclosed in the previous art.

The PhD thesis by Liyanaarachchige Sanjeewani Rupika Herath, entitled "Development and Evaluation of Low Density Polyethylene-Based Antimicrobial Food Packaging Films Containing Natural Agents", published on the 30th September 2010, describes the antimicrobial effect of thymol and carvacrol in low density polyethylene-based film for food packaging in the presence of a binding agent.

Non patent document by M. Martins, entitled "Microencapsulation of thyme oil by coacervation", Journal of Microencapsulation, published on the 1st December 2009, describes the encapsulation of essential oils from oregano in phosphatidyl choline-based liposomes.

Non patent document by C.C. Liolios, entitled "Liposomal incorporation of carvacrol and thymol isolated from the essential oil of Origanum dictamnus L. and in vitro antimicrobial activity", Food Chemistry, published on the 1st January 2009, describes the encapsulation of thyme oil with polylactide in the presence of Tween 20.

Non patent document by S. Krishnan, entitled "The use of gum arabic and modified starch in the microencapsulation of a food flavoring agent", Carbohydrate Polymers, published on the 14th December 2005, describes the use of gum arabic in the microencapsulation of food flavoring agent (cardamon oleoresin).

### SUMMARY OF THE INVENTION

The main spoiling mechanism for salmon marketed as fresh and refrigerated is the growth of microorganisms at surface level, this being the main cause for its short life.

There is a possibility of using natural volatile components with antimicrobial characteristics that can be incorporated into the package. But the appropriate mechanism to incorporate these agents in the plastic structure itself, and for them to be delivered with a different kinetics during the time that the salmon is packaged, has to be determined.

The present invention refers to a process for obtaining a film comprising the incorporation of naturally-sourced antimicrobial agents into a polymeric structure to develop packages that increase the shelf life of refrigerated meat, preferentially refrigerated fresh salmon.

The purpose of this invention is providing a plastic packaging film with antimicrobial capability using volatile essential oils (thymol), which are incorporated into the plastic die itself as a coating over the plastic material through a microencapsulation system that allows for delivering the active compound with different kinetics in function of the encapsulating agent being used.

### BRIEF DESCRIPTION OF THE DRAWINGS

The enclosed drawings are included to provide a deeper insight on the invention.
Figure 1 shows a diagram of the methodology used for the formation of the microcapsules.
Figure 2 shows a graph of the release kinetics of thymol (10,000 ppm) in function of time.
Figure 3 shows a graph of the release kinetics of carvacrol (10,000 ppm) in function of time.
Figure 4 shows a graph of the release kinetics of thymol (20,000 ppm) in function of time.
Figure 5 shows a graph of the release kinetics of carvacrol (20,000 ppm) in function of time.
Figure 6 shows a graph of the release kinetics of thymol (50,000 ppm) in function of time.
Figure 7 shows a graph of the release kinetics of carvacrol (50,000 ppm) in function of time.
Figure 8 shows a graph of the release kinetics of thymol (100,000 ppm) in function of time.
Figure 9 shows a graph of the release kinetics of carvacrol (100,000 ppm) in function of time.
Figure 10 shows a graph of the release kinetics of thymol and carvacrol (10,000 ppm) in function of time.
Figure 11 shows a graph of the release kinetics of thymol and carvacrol (20,000 ppm) in function of time.
Figure 12 shows a graph of the release kinetics of thymol and carvacrol (50,000 ppm) in function of time.
Figure 13 shows a graph of the release kinetics of thymol and carvacrol (100,000 ppm) in function of time.

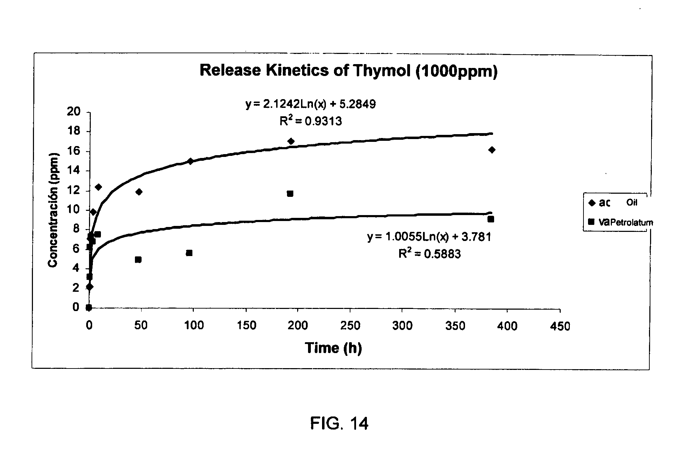

Figure 14 shows a graph of the thymol concentration (1,000 ppm) released from the microcapsules into the model methanolic medium.
Figure 15 shows a graph of the carvacrol concentration (3,000 ppm) released from the microcapsules into the model methanolic medium.
Figure 16 shows a graph of the growth inhibition halos for different microorganisms in microencapsulated films containing antimicrobial agents.

### DESCRIPTION OF THE INVENTION

The present invention refers to processes for obtaining a film comprising the incorporation of naturally-sourced antimicrobial agents into a polymeric structure in order to develop packages for increasing the shelf life of refrigerated meat, preferentially refrigerated fresh salmon.

The active agent, extracted from plant essential oils, is incorporated in the form of microcapsules into the plastic package's inner surface in direct contact with the meat's surface. Different encapsulating agents are used which allow for a release with different kinetics, and different rates of release.

### Microcapsule Preparation

The microcapsule production is accomplished by an emulsification technique from an oil-in-water type of emulsion. In order to do so, an aqueous phase was made up by dissolving 15 g gum arabic (Quimatic) and 2 g Tween 20 in 100 ml distilled water. Gum arabic is slowly added to the distilled water, with continuous agitation for 5 minutes by means of a magnetic agitator at room temperature. This solution pH is adjusted to a value of 6 by adding 10 ml Na OH.

The oily phase is made up by a solution of the naturally-sourced antimicrobial agent with different concentrations (ppm) of thymol-carvacrol. These concentrations of thymol-carvacrol in ppm are: 10,000-10,000, 20,000-20,000, 50,000-50,000, 100,000-100,000, respectively, dissolved in 4.3 g soy oil or petrolatum. This mixture is subjected to mild manual agitation for two minutes at room temperature.

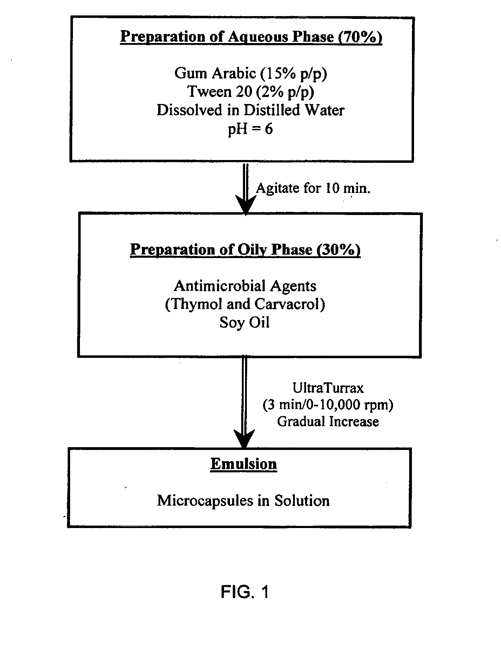

The emulsion is prepared using a homogenizer, dispenser device that allows for emulsifying, homogenizing, and producing suspensions in liquid media generating a mechanic movement by means of rotors that provide an adjustable range of speed. As it is an oil-in-water type of emulsion, the aqueous phase was incorporated onto the oily phase. The homogenizer operation is performed at an increasing speed of 0 up to 10,000 rpm, accelerating from 1,100 rpm every 20 seconds for 3 minutes at room temperature. In this way, the microencapsulation of the optimal synergist combination of thymol and carvacrol with an encapsulating material of gum arabic is obtained. Figure 1 shows a schematic of the methodology used for producing the microcapsules by a separation emulsion technique.

### First Study on the Release Kinetics of the Optimal Microencapsulated Concentration

The analysis of the microencapsulated antimicrobials controlled release was conducted by the assessment of the rate at which they are released to an aqueous solution at a temperature of 4 °C for a month period. Next, Table 1 is presented, in which the experimental factors for the analysis of the antimicrobial agents release are set forth.

**Table 1. Combination of Levels with the Experimental Factors for the study of controlled release.**

| **Combination of Levels with the Experimental Factors** | | | |
|---|---|---|---|
| **Experiments** | **Antimicrobial Agent** | **Antimicrobial Agent Concentration (ppm)** | **Dispersion Medium** |
| 1 | Thymol-Carvacrol | 10,000 | Oil |
| 2 | Thymol-Carvacrol | 20,000 | Oil |
| 3 | Thymol-Carvacrol | 50,000 | Oil |
| 4 | Thymol-Carvacrol | 100,000 | Oil |

In order to conduct this experiment, a solution of 24 ml microcapsules was taken and centrifuged in a microcentrifuge for 6 minutes at 30 rpm, then a microcapsule supernatant was taken and subjected to a wash with 10 ml hexane, repeating this procedure once more. After the wash, 100 µl microcapsules were taken and put into an Eppendorf tube containing 2 ml distilled water. Then, the antimicrobial concentration released in this aqueous medium was evaluated in function of time. Samples were taken at 0, 10, 20, 30, 40, 50, 60, 120, 180, 240, 300, 360, 420, 1440, 2880, 4320, 8640, 10080, 20160, 30240, 40320 min., and then filtered using 0.45-µm microfilters. Finally, 2 µl of this filtered solution were injected into the gas chromatographer with FID detector (flame ionizer).

### Quantification of Thymol and Carvacrol

The determination of the analytes (thymol and carvacrol) is conducted by a gas chromatographer equipped with a column injection system, pressure control, and flame ionizer detector (FID).

The analyses were conducted in a capillary column of fused silica. The injection of samples was conducted by the device autosampler. The injector temperature and that of the detector remained at 250 °C and 300 °C, respectively. The temperature program was: 100 °C as initial temperature, then the temperature was increased to a rate of 8 °C/min up to 180 °, and then 20 °C/min up to 250, where it remained for 5 minutes. The carrier gas was helium, which circulated with a constant flow of 2 ml/min.

In order to determine the quantity of thymol and carvacrol that was released to the aqueous solution, two standard curves were designed for each pure antimicrobial agent, whose chromatography area was in function of the antimicrobial concentration. Based on these curves and by interpolating the area from the injected samples, the value for the antimicrobial concentration released from inside the microcapsules into the external aqueous medium in time was calculated.

For the study of release kinetics of microencapsulated antimicrobial agents, the antimicrobial concentration encapsulated was of 200,000 ppm, consisting of 50% thymol (100,000 ppm) and 50% carvacrol (100,000 ppm). With the purpose of determining the final microencapsulated quantity, the loss of antimicrobial agents left unmicroencapsulated was determined, consisting of a concentration of 2,281.97 ppm thymol, which represents a 1.14%, and 9,102.88 ppm carvacrol (4.6%), which indicates that the actual percentages of microencapsulation were 98.86% for thymol and 95.4% for carvacrol.

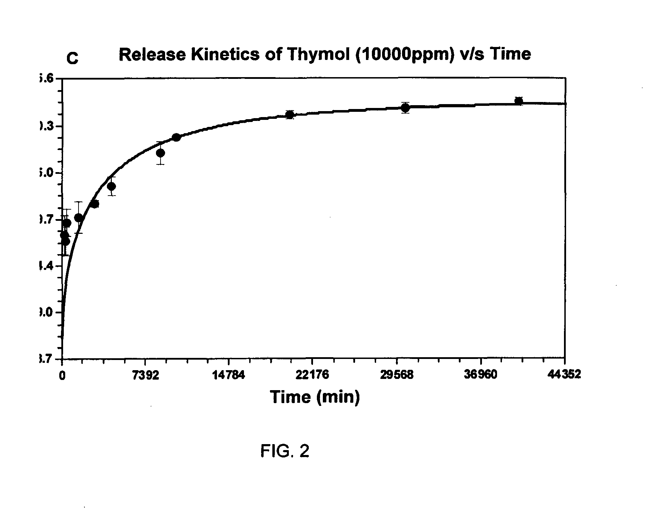

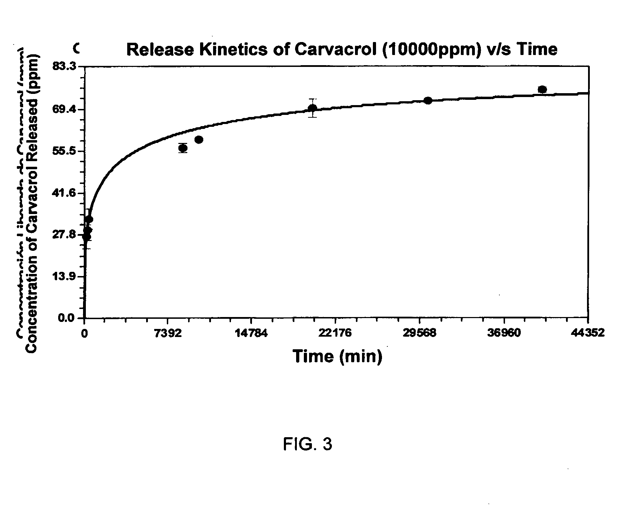

In Figures 2 and 3, the thymol and carvacrol release from the microcapsule is presented with initial concentrations for the antimicrobial agents of 10,000 ppm thymol and 10,000 ppm carvacrol, respectively; the adjustment of kinetics was performed based on the Weibull model (Papadopoulou et al., 2006).

From the obtained results (Table 2) it was observed that the maximum quantity of thymol released after 48 h (2,880 min) had been 21,39 ppm, and in a period of 30 days (40.320 min) had been 32.98 ppm.

**Table 2. Release Kinetics Data of Thymol (10,000 ppm). [ppm] Thymol: Thymol Concentration in ppm SD: Standard Deviation**

| **Time (min)** | **[ppm] Thymol** | **Thymol SD** | **Time (min)** | **[ppm] Thymol** | **Thymol SD** |
|---|---|---|---|---|---|
| **0** | 6.38 | 0.06 | **1,440** | 19.95 | 1.56 |
| **10** | 6.73 | 0.28 | **2,880** | 21.39 | 2.21 |
| **20** | 13.71 | 1.05 | **4,320** | 23.42 | 0.33 |
| **50** | 15.32 | 0.94 | **8,640** | 27.22 | 1.59 |
| **60** | 16.32 | 4.55 | **10,080** | 28.99 | 0.60 |
| **240** | 17.86 | 4.26 | **20,160** | 31.55 | 3.29 |
| **300** | 17.16 | 3.39 | **30,240** | 32.34 | 0.21 |
| **420** | 19.33 | 3.54 | **40,320** | 32.98 | 1.20 |

The obtained results in Table 3 help establishing that the maximum quantity of carvacrol released after 48 h (2,880 min) had been 39.35 ppm, and in a period of 30 days (40,320 min) had been 75.72 ppm.

By comparing the release of carvacrol and thymol in equal microencapsulated concentrations (10,000 ppm), it can be assured that the liquid state of the carvacrol would facilitate the release through the porous membrane provided by the gum arabic as encapsulating material.

**Table 3. Release Kinetics Data of Carvacrol (10,000 ppm).**

| **Time (min)** | **[ppm] Carvacrol** | **Carvacrol SD** | **Time (min)** | **[ppm] Carvacrol** | **Carvacrol SD** |
|---|---|---|---|---|---|
| **0** | 0.07 | 0.06 | **420** | 33.02 | 3.54 |
| **10** | 2.41 | 0.28 | **1,440** | 37.87 | 5.51 |
| **20** | 15.31 | 0.05 | **2,880** | 39.35 | 1.34 |
| **50** | 20.95 | 0.94 | **8,640** | 56.51 | 1.59 |
| **60** | 25.18 | 4.55 | **10,080** | 59.17 | 0.6 |
| **240** | 27.17 | 4.26 | **20,160** | 69.68 | 3.29 |
| **300** | 29.23 | 3.39 | **30,240** | 72.21 | 0.21 |
| | | | **40,320** | 75.72 | 1.2 |

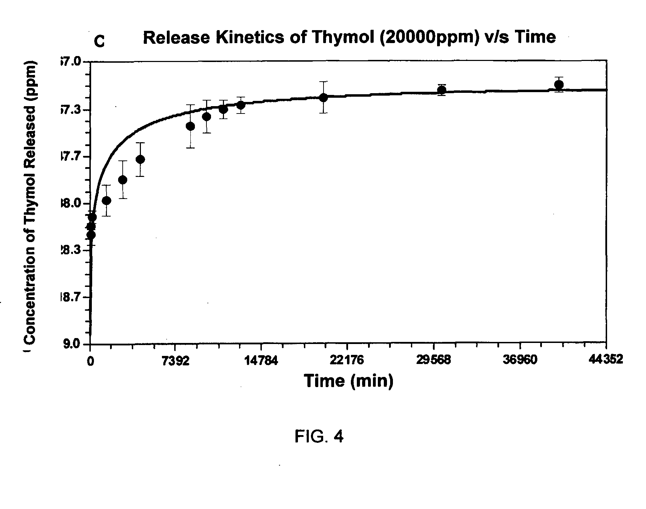

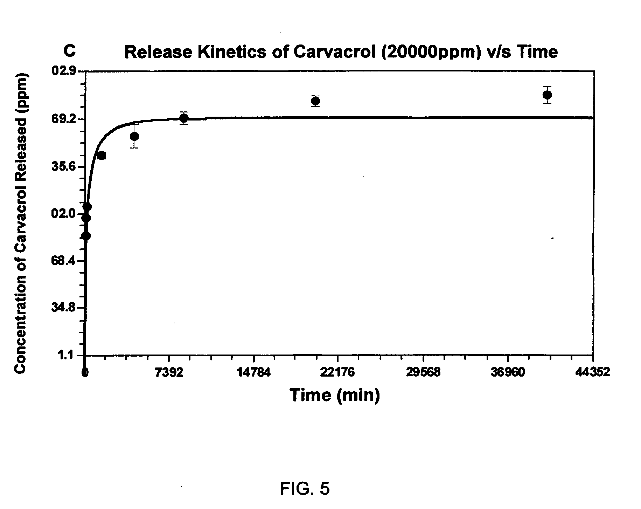

In Figures 4 and 5, the release kinetics of thymol and carvacrol encapsulated at 20,000 ppm is presented.

Then, the obtained results in Table 4 help establishing that the maximum quantity of thymol released after 48 h (2,880 min) had been 50.78 ppm, and in a period of 30 days (40,320 min) had been 62.19 ppm.

**Table 4. Release Kinetics Data of Thymol (20,000 ppm)**

| **Time (min)** | **[ppm] Thymol** | **Thymol SD** | **Time (min)** | **[ppm] Thymol** | **Thymol SD** |
|---|---|---|---|---|---|
| 0 | 13.84 | 1.5 | 1,440 | 48.51 | 3.26 |
| 10 | 16.73 | 0.87 | 2,880 | 50.78 | 3.52 |
| 60 | 27.96 | 0.87 | 8,640 | 58.07 | 4.67 |
| 120 | 31.48 | 2.23 | 20,160 | 59.66 | 3.51 |
| 180 | 35.94 | 0.71 | 30,240 | 60.19 | 2.11 |
| 240 | 38.99 | 0.87 | 40,320 | 62.19 | 1.86 |

From the obtained results (Table 5), it is observed that the maximum quantity of carvacrol released after 30 days (40,320 min) is 186.05 ppm, and after 48 h (2,880 min), 146.97 ppm have been released.

**Table 5. Release Kinetics Data of Carvacrol (20,000 ppm).**

| **Time (min)** | **[ppm] Carvacrol** | **Carvacrol SD** | **Time (min)** | **[ppm] Carvacrol** | **Carvacrol SD** |
|---|---|---|---|---|---|
| 0 | 17.95 | 7.76 | 240 | 107.19 | 0.34 |
| 10 | 35.78 | 9.5 | 1,440 | 143.51 | 2.46 |
| 20 | 44.16 | 0.39 | 2,880 | 146.97 | 1.46 |
| 30 | 45.97 | 0.28 | 4,320 | 156.97 | 8.85 |
| 60 | 70.63 | 0.38 | 8,640 | 169.77 | 4.92 |
| 120 | 86.05 | 1.59 | 20,160 | 181.82 | 4.37 |
| 180 | 98.69 | 1.53 | 40,320 | 186.05 | 5.97 |

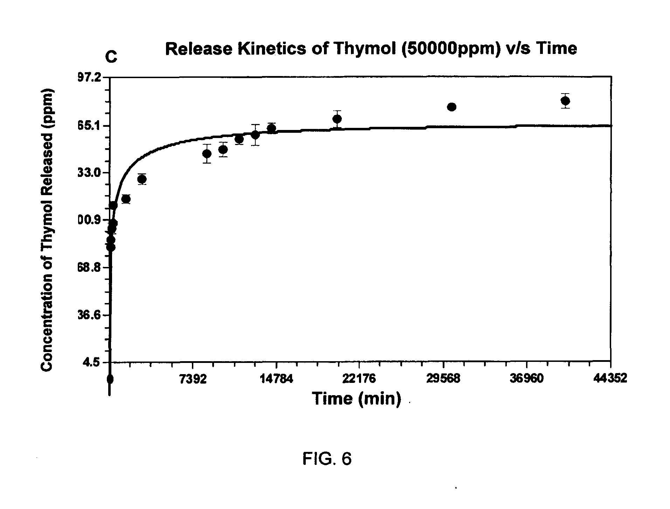

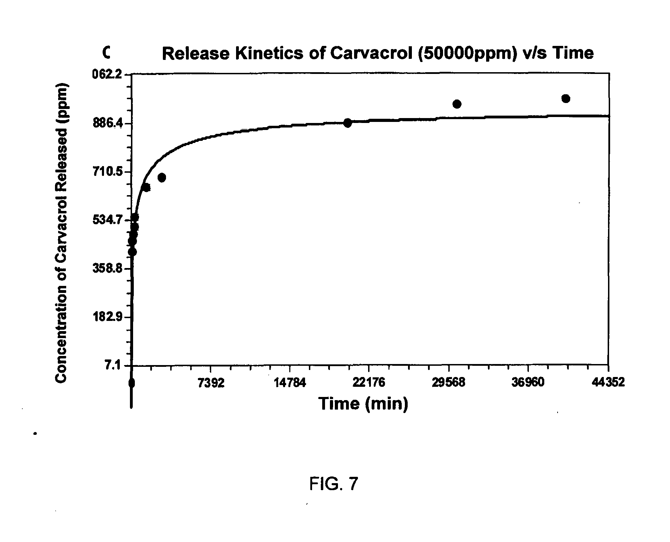

The microcapsule kinetics containing a concentration of thymol of 50,000 ppm (Figure 6), and 50,000 ppm of carvacrol (Figure 7) was analyzed.

In Table 6, the thymol release in a period of 48 h (2,880 min) was 108.46 ppm, and after 30 days it reached a released concentration of 181.16 ppm.

**Table 6. Release Kinetics Data of Thymol (50.000 ppm)**

| **Time (min)** | **[ppm] Thymol** | **SD** | **Time (min)** | **[ppm] Thymol** | **SD** |
|---|---|---|---|---|---|
| 0 | 20.59 | 7.94 | 330 | 101.17 | 1.42 |
| 10 | 21.12 | 2.61 | 1,440 | 105.05 | 3.32 |
| 20 | 35.62 | 7.31 | 2,880 | 108.46 | 4.07 |
| 30 | 49.51 | 7.56 | 8,640 | 110.33 | 2.74 |
| 40 | 62.99 | 6.01 | 10,080 | 118.36 | 2.43 |
| 50 | 77.87 | 8.51 | 11,520 | 122.78 | 4.15 |
| 60 | 81.17 | 4.92 | 12,960 | 124.36 | 7.24 |
| 120 | 82.69 | 2.09 | 14,400 | 137.08 | 3.86 |
| 180 | 87.21 | 5.45 | 20,160 | 148.90 | 5.92 |
| 240 | 95.30 | 4.21 | 30,240 | 166.68 | 1.25 |
| 300 | 98.97 | 1.55 | 40,320 | 181.16 | 5.44 |

In Table 7, by increasing the quantity of microencapsulated carvacrol, the release of this antimicrobial agent in a period of 48 h (2,880 min) was 688.96 ppm, and the maximum release of carvacrol from the microcapsule obtained after a month was 972.1 ppm.

**Table 7. Release Kinetics Data of Carvacrol (50.000 ppm).**

| **Time (min)** | **[ppm] Carvacrol** | **SD** | **Time (min)** | **[ppm] Carvacrol** | **SD** |
|---|---|---|---|---|---|
| 0 | 70.93 | 11.88 | 240 | 485.69 | 2.72 |
| 10 | 72.02 | 32.73 | 300 | 509.68 | 12.1 |
| 20 | 155.58 | 2.12 | 330 | 546.87 | 14.05 |
| 30 | 236.04 | 2.09 | 1,440 | 656.48 | 12.33 |
| 40 | 310.34 | 1.05 | 2,880 | 688.96 | 3.44 |
| 50 | 387.64 | 4.2 | 20,160 | 883.19 | 7.48 |
| 60 | 1417.55 | 15.591 | 130,240 | 1952.82 | 16.82 |
| 120 | 422.85 | 11.261 | 40,320 | 1972.1 | 16.49 |
| 180 | 458.9 | 3.23 | | | |

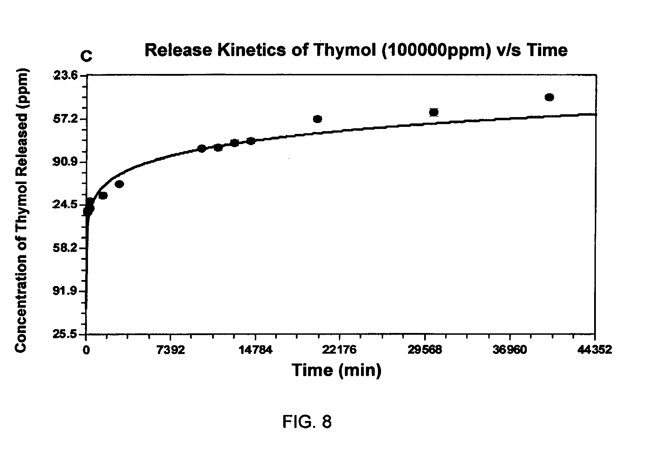

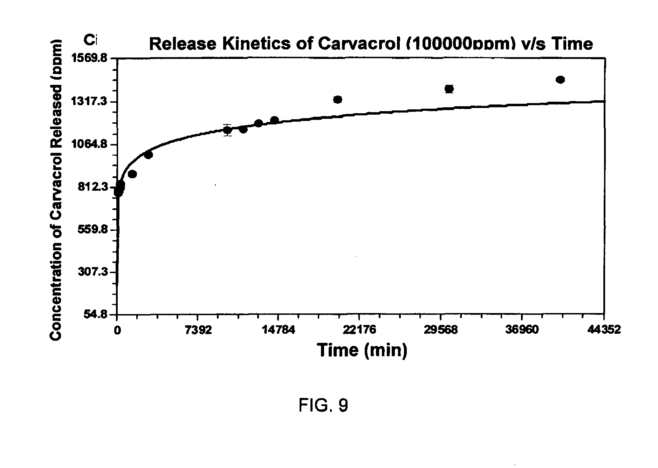

The release kinetics of microcapsule active principles containing 100,000 ppm thymol and 100,000 ppm carvacrol (Figures 8 and 9) was also studied.

In Table 8, by having the quantity of microencapsulated thymol increased even more, the release of thymol in a period of 48 h (2,880 min) was 256.21 ppm. After 30 days of thymol release, a maximum concentration released of 390 ppm was reached, which would reflect that a continuous release in time of AM agent exists.

**Table 8. Release Kinetics Data of Thymol (100,000 ppm)**

| **Time (min)** | **[ppm] Thymol** | **SD** | **Time (min)** | **[ppm] Thymol** | **SD** |
|---|---|---|---|---|---|
| 0 | 58.68 | 3.61 | 330 | 220.09 | 4.3 |
| 10 | 148.52 | 3.95 | 360 | 230.16 | 3.55 |
| 20 | 153.09 | 2.83 | 1,440 | 238.73 | 5.74 |
| 30 | 167.55 | 5.16 | 2,880 | 256.21 | 1.23 |
| 40 | 172.97 | 5.4 | 10,080 | 310.56 | 1.94 |
| 50 | 190.03 | 1.85 | 11,520 | 312.88 | 4.95 |
| 60 | 203.1 | 3.43 | 12,960 | 320.22 | 5.15 |
| 120 | 212.44 | 2.82 | 14,400 | 323.21 | 4.87 |
| 180 | 215.49 | 4.54 | 20,160 | 357.13 | 5.44 |
| 240 | 216.79 | 2.33 | 30,240 | 367.61 | 6.27 |
| 300 | 219.25 | 1.53 | 40,320 | 390.4 | 3.24 |

In Table 9, it was determined that in a period of 48 h (2,880 min.) the carvacrol concentration released into an aqueous medium was 1,004.25 ppm. The maximum concentration released in 1 month (40,320 min) was 1,443.59 ppm.

**Table 9. Release Kinetics Data of Carvacrol (100,000 ppm).**

| **Time (min)** | **[ppm] Carvacrol** | **SD** | **Time (min)** | **[ppm] Carvacrol** | **SD** |
|---|---|---|---|---|---|
| 0 | 181.09 | 22.96 | 360 | 833.89 | 11 |
| 10 | 532.19 | 23.25 | 1,440 | 892.09 | 13.78 |
| 20 | 547.66 | 33.74 | 2,880 | 1004.25 | 14.39 |
| 30 | 604.49 | 22.21 | 10,080 | 1146.46 | 33.85 |
| 40 | 637.02 | 11.4 | 11,520 | 1155.72 | 1.48 |
| 50 | 694.45 | 14.8 | 12,960 | 1184.12 | 1.19 |
| 60 | 749.01 | 13.12 | 14,400 | 1206.24 | 6.11 |
| 120 | 776.57 | 1.3 | 20,160 | 1328.09 | 18.88 |
| 180 | 796.48 | 24.12 | 30,240 | 1389.43 | 27.27 |
| 240 | 800.16 | 21.85 | 40,320 | 1443.59 | 16.75 |
| 330 | 828.89 | 2.77 | | | |

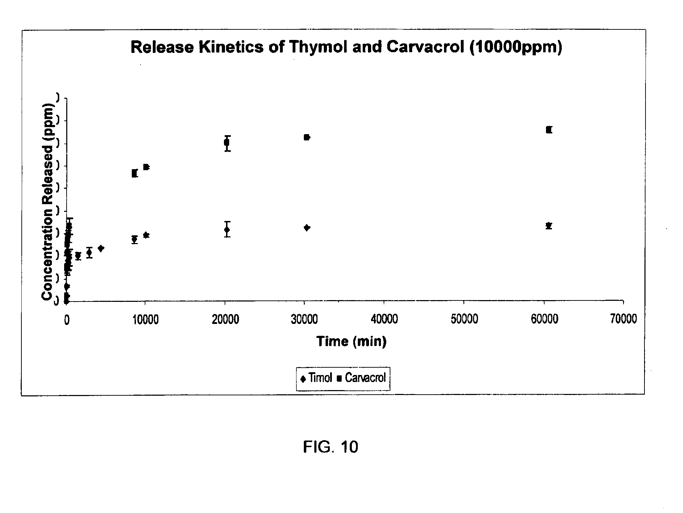

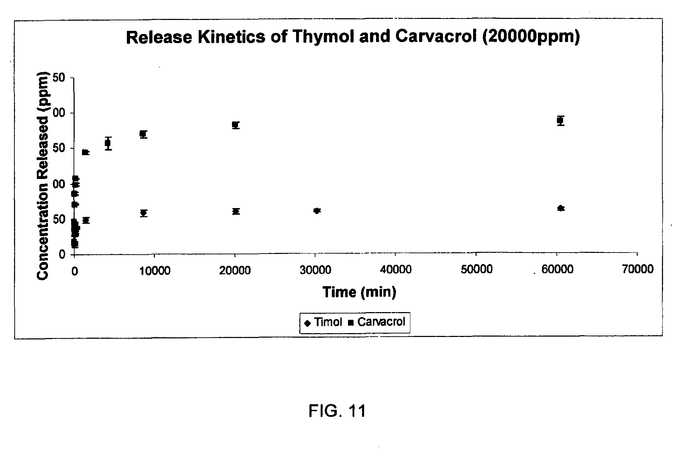

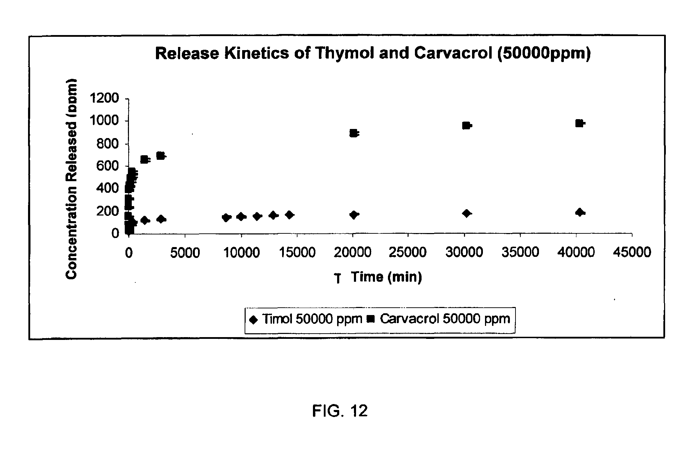

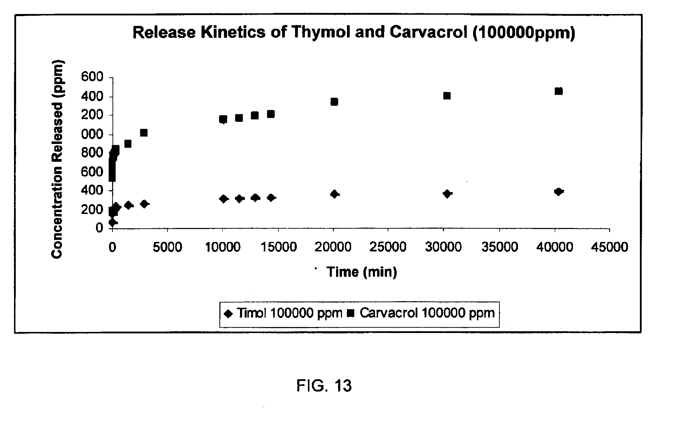

If a graph of the release kinetics of thymol and carvacrol is drawn in equal microencapsulated concentrations, in Figures 10 to 13 it can be noted that there is always been a faster release of carvacrol than that of thymol, as in microencapsulating active agents in liquid state its release is much faster in time than in a crystalline solid one, as it is the case of thymol.

### Second Study of Release Kinetics of Thymol and Carvacrol Microcapsules with Gum Arabic as an Encapsulating Material

The microcapsule production was accomplished by an emulsification technique from an oil-in-water type of emulsion. In order to do so, an aqueous phase was made by dissolving 15 g gum arabic and 2 g Tween 20 in 100 ml distilled water. Gum arabic was added slowly to the distilled water, with continuous agitation for 5 minutes by means of a magnetic agitator at room temperature. This solution pH was adjusted to a value of 6 by adding 10 ml Na OH.

The oily phase was made up by a solution of 1,000 and 3,000 ppm natural antimicrobial agent (thymol or carvacrol) dissolved in 4.3 g soy oil or petrolatum. This mixture was subjected to mild manual agitation for two minutes at room temperature.

The controlled release study of microencapsulated antimicrobial agents was conducted by the assessment of the rate at which they were released into a methanolic solution.

**Table 10. Combination of Levels with the Experimental Factors for the study of controlled release, and the antimicrobial effect.**

| Combination of Levels of the Experimental Factors | | | |
|---|---|---|---|
| Experiments | Antimicrobial Type | Antimicrobial Concentration | Dispersion Medium |
| 1 | Thymol | 1,000 | Oil |
| 2 | Thymol | 1,000 | Petrolatum |
| 3 | Thymol | 3,000 | Oil |
| 4 | Thymol | 3,000 | Petrolatum |
| 5 | Carvacrol | 1,000 | Oil |
| 6 | Carvacrol | 1,000 | Petrolatum |
| 7 | Carvacrol | 3,000 | Oil |
| 8 | Carvacrol | 3,000 | Petrolatum |

In order to conduct this experiment, a solution of 20 ml microcapsules was taken and subjected to centrifugation for 6 minutes at 30 rpm, then the (microcapsule) supernatant was collected and subjected to a wash with 10 ml hexane, repeating this procedure twice more. Subsequently, from the solution of washed microcapsules, a volume of 70 µl was taken and suspended on a vial containing 2 ml methanol. Then, the antimicrobial concentration in the methanolic medium was evaluated in function of time. Samples were taken at 0, 0.17, 0.3, 0.5, 1, 2, 4, 8, 48, 96, 192, and 384 hours, and filtered using 0.45-µm microfilters. Finally, 2 µl of this filtered solution were injected into the gas chromatographer.

### Quantification of Thymol and Carvacrol

In order to determine the quantity of thymol and carvacrol that was released into the methanolic solution, two standard curves were designed for each pure antimicrobial agent in function of the chromatography area, and the antimicrobial concentration. Based on these curves and with the area from the injected samples, the value for the antimicrobial concentration released from inside the microcapsule into the methanolic medium was calculated.

In this procedure, a chromatographer equipped with a FID-type detector (flame ionization), and a capillary column of fused silica (30 m x 0.32 mm ID, 0.25 µm thickness) was used. The sample injection was conducted by the chromatographer autosampler, and the column temperature was programmed the following way: It was started at 100 °C, then it had a heating rate of 20 °C per minute to go up to 180 °C, increasing again to 5 °C per minute to finally going up to a temperature of 250 °C.

### Release of Thymol and Carvacrol

The release of microencapsulated antimicrobial agent in time for the different experiences was determined by the rate of release in a metabolic medium.

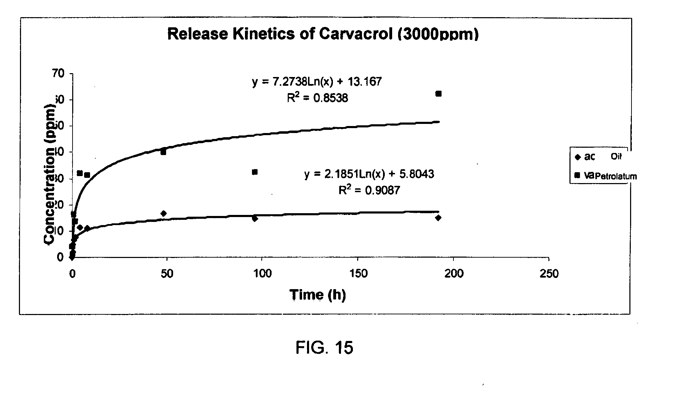

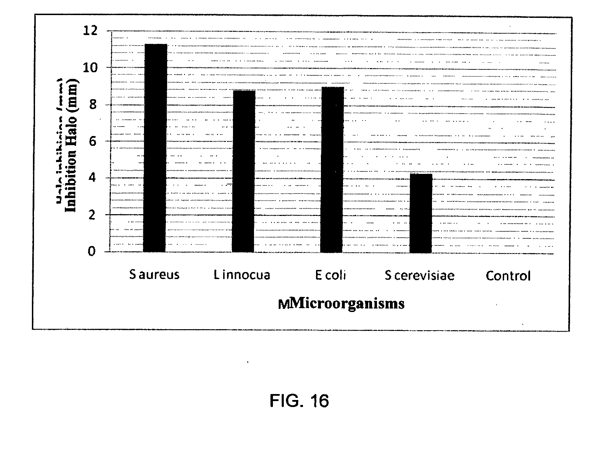

By drawing a graph of all the experiences, a logarithmic tendency in function of time is observed, and a curve equation was obtained, which provides the rate constant of release of antimicrobial agent for each condition. In Figures 15 and 16, the concentration of thymol and carvacrol, respectively, is shown as released from the microcapsules into the model methanolic medium.

The last step of this procedure comprises the incorporation of the microcapsules into polymers, which need to be previously treated in order to reduce their surface tension (corona treatment), which assumes the superficial ionization of the plastic matrix, the microcapsules settling over the film, and letting them dry on a stove at controlled temperature.

### Third Study: Determining the Antimicrobial Capability of Plastic Film by Incorporating Microcapsules

According to what was shown in Figure 16, the antimicrobial effect of an active package with concentrations of 50,000 ppm thymol and 50,000 ppm carvacrol in the microcapsules was determined. In order to do that, the growth inhibition halo for different microorganisms around the film was determined, which was 11.26 mm for *Staphylococcus aureus,* 8.76 mm for *Listeria innocua,* 9.00 mm for *Escherichia coli,* and 4.26 mm for *Saccharomices cerevisiae.*

## Claims

1. A process for obtaining a film comprised of the incorporation of naturally-sourced antimicrobial agents into a polymeric structure to develop packages for increasing the shelf life of refrigerated meat, preferentially refrigerated fresh salmon, wherein said process comprises the following steps:
a) obtaining microcapsules of a naturally-sourced antimicrobial agent in an enveloping medium, comprising the steps of:
a1) producing an aqueous phase dissolving gum arabic and Tween 20 in distilled water;
a2) producing an oily phase through a solution of the naturally-sourced antimicrobial agent with a mixture of thymol and carvacrol;
a3) preparing an emulsion incorporating the aqueous phase onto the oily phase;
b) incorporating the microcapsules into polymers, treating them previously in order to reduce their surface tension by corona treatment, the microcapsules settling over the film, and letting them dry on a stove at controlled temperature.

2. A process for obtaining a film, according to claim 1, wherein said aqueous phase of step a1) is obtained dissolving 15 g gum arabic with 2 g Tween 20 in 100 ml distilled water.

3. A process for obtaining a film, according to claim 2, wherein said gum arabic was slowly added onto the distilled water, with continuous agitation for 5 minutes by means of a magnetic agitator at room temperature.

4. A process for obtaining a film, according to claim 3, wherein it comprises adjusting the solution pH to a value of 6 by adding 10 ml Na OH.

5. A process for obtaining a film, according to claim 1, wherein in the step a2) the concentration of thymol and carvacrol in ppm is 1,000 thymol and 3,000 carvacrol.

6. A process for obtaining a film, according to claim 1, wherein in the step a2) the concentration of thymol and carvacrol in ppm is 10,000 thymol and 10,000 carvacrol.

7. A process for obtaining a film, according to claim 1, wherein in the step a2) the concentration of thymol and carvacrol in ppm is 20,000 thymol and 20,000 carvacrol.

8. A process for obtaining a film, according to claim 1, wherein in the step a2) the concentration of thymol and carvacrol in ppm is 50,000 thymol and 50,000 carvacrol.

9. A process for obtaining a film, according to claim 1, wherein in the step a2) the concentration of thymol and carvacrol in ppm is 100,000 thymol and 100,000 carvacrol.

10. A process for obtaining a film, according to any of the claims 5 to 9, wherein in the step a2) thymol and carvacrol are dissolved in 4.3 g soy oil.

11. A process for obtaining a film, according to any of the claims 5 to 9, wherein in the step a2) thymol and carvacrol are dissolved in 4.3 g petrolatum.

12. A process for obtaining a film, according to claim 10 or 11, wherein in the step a2) the mixture is subjected to mild manual agitation for two minutes at room temperature.

13. A process for obtaining a film, according to claim 12, wherein in the step a3) the homogenization is performed at an increasing speed of 0 up to 10,000 rpm, accelerating from 1,100 rpm every 20 seconds for 3 minutes at room temperature.

## Patentansprüche

1. Verfahren zum Erhalten einer Folie umfassend die Einarbeitung von antimikrobiellen Mitteln natürlichen Ursprungs in eine polymere Struktur, um Verpackungen zur Erhöhung der Haltbarkeit von gekühltem Fleisch, vorzugsweise gekühltem frischem Lachs, zu entwickeln, wobei das Verfahren die folgenden Schritte umfasst:
a) das Erhalten von Mikrokapseln von einem antimikrobiellen Mittel natürlichen Ursprungs in einem umhüllenden Medium, umfassend die Schritte:
a1) das Herstellen einer wässrigen Phase durch Auflösen von Gummi arabicum und Tween 20 in destilliertem Wasser;
a2) das Herstellen einer öligen Phase durch eine Lösung des antimikrobiellen Mittels natürlichen Ursprungs mit einer Mischung von Thymol und Carvacrol;
a3) das Herstellen einer Emulsion durch Einarbeiten der wässrigen Phase in die ölige Phase;
b) das Einarbeiten der Mikrokapseln in Polymere, das Behandeln dieser vorher, um ihre Oberflächenspannung zu verringern, durch Coronabehandlung, das Absetzen der Mikrokapseln auf der Folie, und das Trocknenlassen dieser an einem Ofen bei kontrollierter Temperatur.

2. Verfahren zum Erhalten einer Folie nach Anspruch 1, wobei die wässrige Phase von Schritt a1) durch Auflösen von 15 g Gummi arabicum mit 2 g Tween 20 in 100 ml destilliertem Wasser erhalten wird.

3. Verfahren zum Erhalten einer Folie nach Anspruch 2, wobei das Gummi arabicum langsam zu dem destilliertem Wasser zugegeben wird, mit kontinuierlichem Rühren während 5 Minuten mittels eines Magnetrührers bei Raumtemperatur.

4. Verfahren zum Erhalten einer Folie nach Anspruch 3, wobei es das Einstellen des pH-Werts der Lösung auf einen Wert von 6 durch Zugeben von 10 ml NaOH umfasst.

5. Verfahren zum Erhalten einer Folie nach Anspruch 1, wobei in dem Schritt a2) die Konzentration von Thymol und Carvacrol in ppm 1000 Thymol und 3000 Carvacrol beträgt.

6. Verfahren zum Erhalten einer Folie nach Anspruch 1, wobei in dem Schritt a2) die Konzentration von Thymol und Carvacrol in ppm 10000 Thymol und 10000 Carvacrol beträgt.

7. Verfahren zum Erhalten einer Folie nach Anspruch 1, wobei in dem Schritt a2) die Konzentration von Thymol und Carvacrol in ppm 20000 Thymol und 20000 Carvacrol beträgt.

8. Verfahren zum Erhalten einer Folie nach Anspruch 1, wobei in dem Schritt a2) die Konzentration von Thymol und Carvacrol in ppm 50000 Thymol und 50000 Carvacrol beträgt.

9. Verfahren zum Erhalten einer Folie nach Anspruch 1, wobei in dem Schritt a2) die Konzentration von Thymol und Carvacrol in ppm 100000 Thymol und 100000 Carvacrol beträgt.

10. Verfahren zum Erhalten einer Folie nach einem der Ansprüche 5 bis 9, wobei in dem Schritt a2) Thymol und Carvacrol in 4,3 g Sojaöl gelöst werden.

11. Verfahren zum Erhalten einer Folie nach einem der Ansprüche 5 bis 9, wobei in dem Schritt a2) Thymol und Carvacrol in 4,3 g Vaseline gelöst werden.

12. Verfahren zum Erhalten einer Folie nach Anspruch 10 oder 11, wobei in dem Schritt a2) die Mischung zwei Minuten lang einem sanften manuellen Rühren bei Raumtemperatur unterworfen wird.

13. Verfahren zum Erhalten einer Folie nach Anspruch 12, wobei in dem Schritt a3) die Homogenisierung mit einer zunehmenden Geschwindigkeit von 0 bis 10000 U/min, wobei alle 20 Sekunden um 1100 U/min beschleunigt wird, 3 Minuten lang bei Raumtemperatur durchgeführt wird.

## Revendications

1. Processus pour obtenir un film, comprenant l'incorporation d'agents antimicrobiens de source naturelle dans une structure polymère pour développer des emballages destinés à augmenter la durée de conservation de viande ou de poisson à l'état réfrigéré, de préférence de saumon frais réfrigéré, dans lequel ledit processus comprend les étapes suivantes :
a) obtention de microcapsules d'un agent antimicrobien de source naturelle dans un milieu d'enrobage, comprenant les étapes suivantes :
a1) production d'une phase aqueuse en dissolvant de la gomme arabique et du Tween 20 dans de l'eau distillée ;
a2) production d'une phase huileuse via une solution de l'agent antimicrobien de source naturelle avec un mélange de thymol et de carvacrol ;
a3) préparation d'une émulsion en incorporant la phase aqueuse dans la phase huileuse ;
b) incorporation des microcapsules dans des polymères, leur traitement préalable de manière à réduire leur tension superficielle par un traitement corona, précipitation des microcapsules sur le film, et leur séchage sur un réchaud à température contrôlée.

2. Processus d'obtention d'un film selon la revendication 1, dans lequel ladite phase aqueuse de l'étape a1) est obtenue en dissolvant 15 g de gomme arabique avec 2 g de Tween 20 dans 100 ml d'eau distillée.

3. Processus d'obtention d'un film selon la revendication 2, dans lequel ladite gomme arabique a été lentement ajoutée à l'eau distillée avec une agitation continue durant 5 minutes à l'aide d'un agitateur magnétique à température ambiante.

4. Processus d'obtention d'un film selon la revendication 3, comprenant l'ajustement du pH de la solution à une valeur de 6 en ajoutant 10 ml de NaOH.

5. Processus d'obtention d'un film selon la revendication 1, dans lequel à l'étape a2), les concentrations de thymol et de carvacrol sont de 1.000 ppm de thymol et de 3.000 ppm de carvacrol.

6. Processus d'obtention d'un film selon la revendication 1, dans lequel à l'étape a2), les concentrations de thymol et de carvacrol sont de 10.000 ppm de thymol et de 10.000 ppm de carvacrol.

7. Processus d'obtention d'un film selon la revendication 1, dans lequel à l'étape a2), les concentrations de thymol et de carvacrol sont de 20.000 ppm de thymol et de 20.000 ppm de carvacrol.

8. Processus d'obtention d'un film selon la revendication 1, dans lequel à l'étape a2), les concentrations de thymol et de carvacrol sont de 50.000 ppm de thymol et de 50.000 ppm de carvacrol.

9. Processus d'obtention d'un film selon la revendication 1, dans lequel à l'étape a2), les concentrations de thymol et de carvacrol sont de 100.000 ppm de thymol et de 100.000 ppm de carvacrol.

10. Processus d'obtention d'un film selon l'une quelconque des revendications 5 à 9, dans lequel à l'étape a2), le thymol et le carvacrol sont dissous dans 4,3 g d'huile de soja.

11. Processus d'obtention d'un film selon l'une quelconque des revendications 5 à 9, dans lequel à l'étape a2), le thymol et le carvacrol sont dissous dans 4,3 g de vaseline.

12. Processus d'obtention d'un film selon la revendication 10 ou 11, dans lequel à l'étape a2), le mélange est soumis à une agitation manuelle légère durant deux minutes à température ambiante.

13. Processus d'obtention d'un film selon la revendication 12, dans lequel à l'étape a3), l'homogénéisation est mise en oeuvre à une vitesse augmentant de 0 à 10.000 tr/min, en accélérant de 1.100 tr/min toutes les 20 secondes durant 3 minutes à température ambiante.
